# EUROPEAN PATENT APPLICATION

(11) **EP 2 392 950 A1**
(43) Date of publication of application: **07.12.2011**
(21) Application number: 09839072.7
(22) Date of filing: 05.10.2009
(51) Int. Cl.: G02B 5/08

(54) **SOLAR REFLECTOR AND PRODUCTION METHOD**

(30) Priority: 30.01.2009 ES 200900270
(71) Applicant: Nematia Ingenieria Integral, S.l., 23600 Martós Jaén (ES)
(72) Inventor: DONAIRE CAMACHO, Juan Manuel, E-23600 Martos- Jaén (ES)
(74) Representative: Carvajal y Urquijo, Isabel
(86) International application number: PCT/ES2009/000482
(87) International publication number: WO 2010/086468

(57) **Abstract**

The invention relates to a solar reflector having a base support (5) made from injected thermoplastic material 1-7 mm thick. The base support (5) has: a surface on a front face having a "mirror polish" surface finish and a geometry defined by an optical function; a structure of reinforcing ribs (13) in a rear portion to provide dimensional stability and assure the geometry defined by the optical function of the surface on the front face; fixing bushings (6) overmolded and integrated in the base support (5) having threaded holes (7) to receive threaded bolts and allow assembly regulation by means of the fixing bushings (6), the threaded bolts and lock nuts. The solar reflector also has a covering of a reflective metal (11) on the front face and a layer of protective fluids (12) on the covering of the reflective metal (11).

## Description

### Object of the Invention

According to the title of this specification, the present invention relates to a new solar reflector for solar power concentration power plants or the like and the method for producing it.

It is one of the main elements used in solar power plants. Said element is used in these power plants to collect direct solar radiation and concentrate it on a receiving system, where the radiant energy, through a process, is converted into electric energy suitable for the use and/or storage thereof. Nevertheless novel applications in different fields of solar energy can be derived from this invention, generating a new range of customized and need-based products, such as for example small solar thermal cells suitable for dwellings and buildings.

The new reflector is applicable to new and customized electric or thermal generation units, such as:
- Large communal buildings
- Industrial parks
- Single-family dwellings
- Etc.

### State of the Art

Solar thermal concentration systems (STCS) are based on harnessing direct solar energy to convert it into electric energy. These generation systems are called solar power plants. They use different technologies among which the following stand out:
- Parabolic trough collector (PTC) system
- Parabolic dish or paraboloid of revolution (PD) systems
- Central receiver or tower systems (CRS)

A parabolic trough power plant (hereinafter PTPP) represents the most developed technology. It consists of collecting direct solar radiation through the parabolic trough reflective mirrors. The direct radiation is concentrated in an absorption tube through which there circulates special oil which is progressively heated, reaching about 400° at the end of the loop. This heat is used to generate steam which generates electricity through a turbine. A parabolic trough collector is about 150 m in length and is made up of several segments or modules the length of which is about 12 m. Each segment consists of 28 mirrors curved in one of the dimensions thereof with a parabolic shape which concentrates on its focal line all the solar radiation impinging on the aperture plane thereof.

In the state of the art, the reflective component used in all the mentioned installations is formed by low iron content glass mirrors. There are different thicknesses depending on the required curvature of the glass. A thin silver film protected by means of a copper film and a coat of epoxy paint or protective lacquer is deposited on the rear face. Depending on the thickness of the glass on which the reflective silver film is deposited, two different types of mirrors are obtained: thick glass mirrors (3-5 mm thick) and thin glass mirrors (1.5-3 mm thick). Although this technology is considered the most developed, there are still many aspects to be improved which mainly relate to optimizing the system, reducing and improving the cost of glass mirrors and of other components, as well as optimizing operating and maintenance jobs. Although glass reflectors are currently used due to their greater durability and reflectivity, they have still not been improved enough and their high production and maintenance cost make it a type of technology that is still too expensive. On the other hand, the performance is reduced due to the efficiency losses they suffer. Environmental factors tint the glass, affecting the reflectivity of the reflectors and the transmissivity of the glass cover of the absorption tube. Maintaining the theoretical optical definition further involves considerable difficulty, because they are very large and weak parts, which can involve considerable efficiency losses of the collector.

Parabolic dish (PD) or paraboloid of revolution technology defines a parabolic dish system consisting of a reflector formed by a set of mirrors forming and approximating the shape of a large-diameter paraboloid of revolution with an external combustion engine/receiver located in its focal area, where all the solar radiation collected by the aperture of the paraboloid is concentrated.

Parabolic dishes are built with a tensioned membrane or with facets discretely approaching the geometry of the paraboloid. The reflective surface is obtained on the basis of glass mirrors or reflective films.

This technology is currently in the developmental stage. There are working prototypes, although the high cost of both the mirrors and of the assembly makes their massive introduction on the electric generation market non-viable for now.

Central or tower receivers (CRS) are in the developmental stage. They use a circular arrangement of large mirrors having an individual path (heliostats) for concentrating sunlight in a central receiver assembled at the top of a tower, where the radiant energy is converted into electric energy.

The reflectors used in this technology are flat reflectors (although the application of new models is being researched) arranged on a support structure spaced at determined distances from one another.

Concerning the production method for producing current reflectors and the characteristics of each material used:

The production method is focused on the reflectors used in parabolic trough power plants because they are currently used and are more developed.
- The thick glass, one of the base supports used for the reflectors, is hot-curved so that it adopts the parabolic shape it must have, such that the mirrors can be placed directly on the metal structure of the collector.

When the thickness of glass is small, the mirror is flexible enough to be cold-curved and can be adhered directly on a support made from a metal or plastic plate which assures the curvature of the concentrator. In other words, the parabolic trough shape is provided by the mentioned plate on which the mirrors having a small thickness are adhered.

Silver or aluminum foil, another layer of copper and another layer of epoxy paint or protective lacquer are adhered to the glass on the rear portion of the exposed portion to finally insert ceramic parts therein to fix it to the structure, assuring and providing sufficient stability and rigidity, in addition to maintaining the optical definition of the mirror. Other support means for the reflective film, even though they are not used in industrial applications, are:
- Sheet metal. High mirror reflectivity polished aluminum sheets in which the support material in turn acts like a reflective element are used. It is low-cost, but it has low durability because the surface deteriorates more quickly, therefore the reflectivity decreases, in addition to the optical alterations caused by temperature differences. They are not normally used for long-duration industrial applications.
- Plastic. An extruded flat plate which can have different thicknesses of plastic material on which aluminum or silver foil is deposited on its front face. The parabolic shape must be provided by a stronger support on which the mentioned plate will be adhered. This is also the case of thin glass mirrors. These means are not long-lasting when exposed to the weather because the reflective surface directly erodes.

The support means described above (glass, sheet metal and plastic) are the three most significant types of reflective mirrors with respect to the material.

The characteristics reflective mirrors must comply with are:
- Geometric/physical characteristics. The reflector must be a rectangular plate having a parabolic section obtained by means of thermal deformation in the case of thick glass or through the fixing elements for fixing to the support, this being the case of thin glass, sheet metal and plastic. In all cases the element supporting the reflectors must assure the geometric-theoretical definition over time. The approximate dimensions are 1.7 x 1.4 m.
- Optical characteristics. The characteristics the reflective surface must comprise are as follows:
   · surface quality concerning the polishing and tensioning of the reflective area.
   · The inner surface on which the aluminum foil, silver foil or foil of other materials is adhered has to be completely tensed and it must correspond to the most accurate optical definition of a parabolic trough surface.
   · Another aspect affecting the optical performance of the reflector is the chemical composition of the glass determining its transparency (especially the higher or lower iron content), in addition to the quality of the outer surface of the glass. The latter must also be completely tensed, and so should the inner portion of the glass where the silver or aluminum foil is adhered.
   · Abrasion resistance of the glass which involves the impingement of the resulting powder and tints it.

### Description of the Invention

The invention relates to a new mirror model made from injected thermoplastic material and the system used for obtaining the reflective surface, as well as the protection thereof, in addition to the production method for producing the assembly.

The objective is to reduce the high economic cost, maintaining the same performance of the collector or increasing it. It is necessary and urgent to achieve maximum solar radiation harnessing simply and economically.

A first and the most important aspect of the invention relates' to the material used for the base support of the reflector, made from injected thermoplastic and configured to be coupled in current solar power concentration power plants. It maintains the same optical definition or a new definition if required. Its thickness can range between 1-7 mm, not including the reinforcing ribs giving it dimensional stability.

In addition to the raw material price, the use of thermoplastic is based on the advantages it offers, such as its transformation in an injection mold. This production mode allows obtaining any part no matter how complex it is in a very widespread process today, providing great improvements concerning production rates and possibilities of incorporating it to automated processes, whereby achieving very competitive prices.

A second aspect of the invention relates to the mode of obtaining the reflective surface, which is different from those currently used. It is obtained as a result of the direct deposition of materials such as aluminum, silver, chrome, stainless steel, etc., on the front visible face. The reflectors made from thermoplastic material are introduced inside a high-vacuum metal plating hood, where the metal cladding process is carried out by means of sublimation and deposition. These types of metal plating processes are not nor do they comprise ordinary galvanization processes because they confer fewer technical properties suited to the applications herein present, in addition to being highly contaminating and harmful to human health.

During the cladding process, satellites (part bearing systems) rotate around the source of evaporation and about the very axis to uniformly plate complex surfaces as well. The vacuum further assures an ideal condition for obtaining a perfectly uniform and compact cladding. For shiny molded plastic materials (also called mirror-like materials), deposition takes place directly after a prior plasma treatment in the process chamber, providing a shiny and glazed mirror effect.

Another similar cladding process whereby a suitable reflective surface can be obtained is metal plating through the sputtering method. In this process, an indestructible bond is formed between the film and the substrate or base because they become welded at the molecular level, providing a metallic effect with high abrasion resistance.

In the third place, after metal plating, the reflective surface is protected by means of the application or applications of completely transparent fluids with the necessary hardness once catalyzed to withstand the weather directly thereon. To that end, in a special dust-free facility ("clean room") a specific preparation treatment is previously applied to the parts, before the mentioned applications. Finally, a curing and drying treatment is performed, leaves it with the necessary technical characteristics to comply with technical requirements.

In synthesis, the main features of the invention are:
- Constructing the reflector with any optical definition of the following types:
   - Parabolic trough
   - Paraboloid of revolution
   - Combination of paraboloids of revolution with different focal points (multifocal)
   - Fresnel type reflective surfaces
   - Combination of different optical definitions in the same reflector, such as parabolas, ellipses, hyperbolas, parabolic troughs, etc.
- Fixing system for fixing it to the support structure by means of metal inserts or overmolded material inserts allowing accurate regulation for obtaining the perfect theoretical position with respect to the focal point both during the initial assembly and in the maintenance of said position over time if it were modified by agents external to the reflector.
- Direct application of the metal plating added by means of sublimation in a high-vacuum hood or by means of high-vacuum sputtering.
- Direct application of highly transparent and hard protective fluids on the metal plated reflective surface preventing the deterioration of the mentioned surface due to the action of external agents over time.
- Reuse of the same mirror once its service life has ended with a simple stripping, washing, drying and applying the described process again.

### Brief Description of the Drawings

Images or drawings which help to better understand the invention and processes described and which expressly relate to an embodiment of said invention as a non-limiting example thereof are briefly described below:
Figures 1A and 1B show images of a parabolic trough collector.
Figure 2 shows an image of a parabolic dish or paraboloid of revolution.
Figure 3A is an image of the new reflector made from thermoplastic material seen from its front face (useful face).
Figures 3B and 3C are images of the new reflector seen from its rear face, where the reinforcing structure or ribs as well as the fixing elements are seen.
Figure 3D is an overall detailed image of a fixing element of the reflector, an overmolded insert.
Figure 4A is a section of the thicknesses and the arrangement thereof; optional application of a primer, base material (thermoplastic), deposition of reflective material (metal plating) and protective applications.
Figure 4B is a cross-section showing the fixing bushing overmolded with the thermoplastic material.

### Description of the Preferred Embodiment

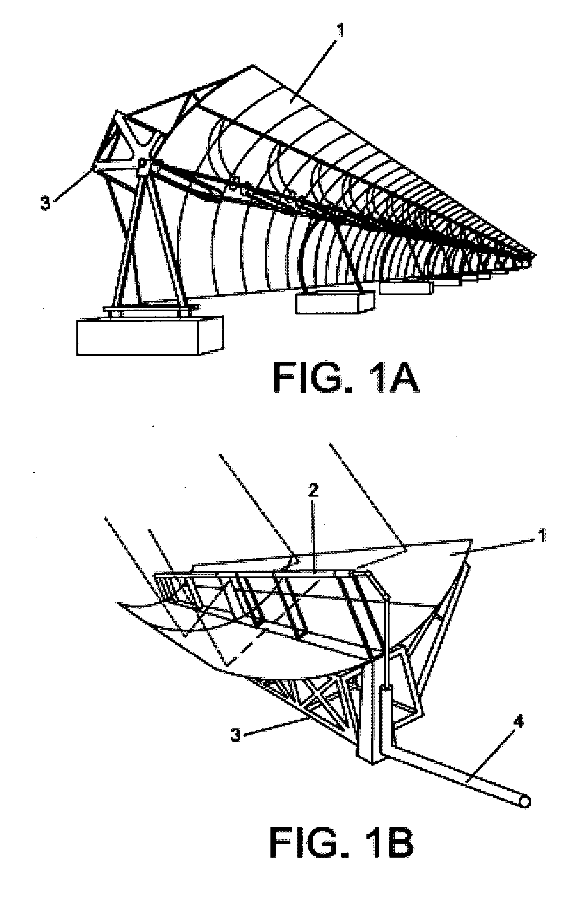

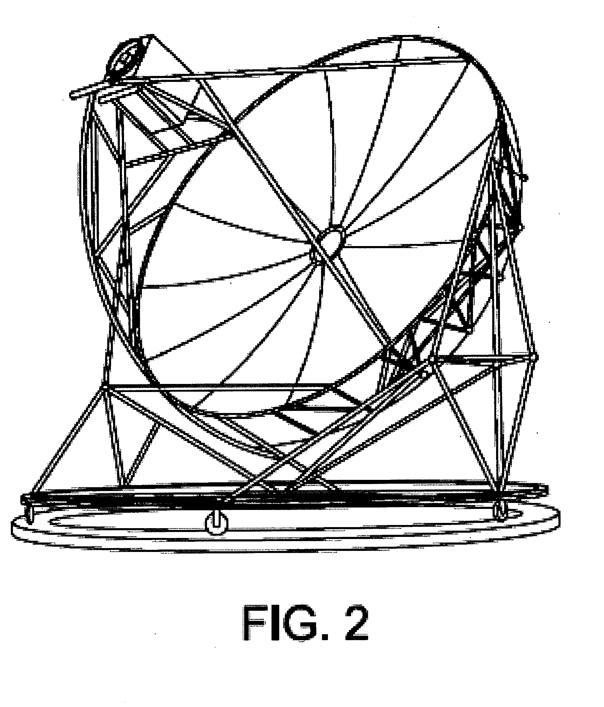

Referring to the reference numbers used in the drawings, it can be seen that Figures 1 and 2 show a reflector 1 with the absorption tube 2, all supported on the metal structure 3. The system of pipes 4 of the solar field is also depicted.

The production of current reflectors is conditioned to the way the reflective surface thereof, as well as the protection thereof against external agents, are obtained. The most widespread way today consists of adapting a mirror to the optical definitions used, the mirror comprising special characteristics such as specific glass, silver or aluminum foil, support and attachment elements, in addition to fixing or anchoring points for fixing or anchoring to the support structures that are usually made from ceramic and are disposable when their service life ends.

Implementing the process described above involves very high production and raw material costs, resulting in a very substantial final price for the reflector that decisively conditions the viability of projects as a whole.

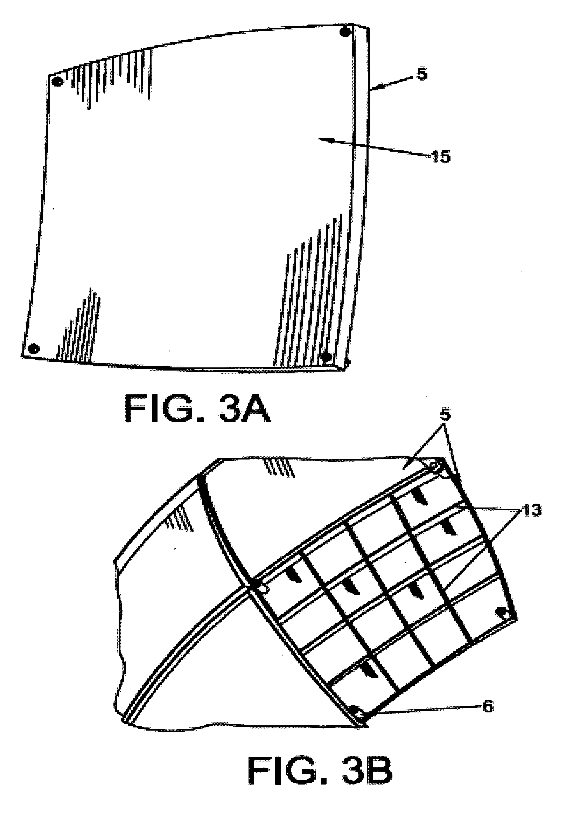

The new reflector 5, object of the invention, such as the one shown in Figure 3A, solves the most important problems today, such as:
- Raw material cost
- Production costs, providing more technical features as well as the reuse of reflectors once the service life has ended at a lower price than the initial production price and with the same features.

This product can be produced in a completely automated continuous flow cell which would consist of the following elements:
- Injection machine with manipulator
- Injection mold
- Conveyor belt
- High-vacuum metal plating hoods
- Cabinets for applying the protective fluids
- Quality control elements
- Packaging

The technical features of the new reflector, i.e., for the concentration and harnessing of solar radiation, are substantially better due to the new characteristics it complies with:
- Reflective surface quality concerning the tension, polishing and accurate adjustment thereof to the optical definition used.
- Due to the configuration and dimensions of the current reflector, said reflector does not have the necessary consistency for withstanding the stresses that can be transmitted to it from the support structure, being subjected to temperature differences, typical construction errors, etc. These aspects alter the theoretical definition of the optical definition with the subsequent loss in performance. The robust design of the new reflector assures a dimensional stability autonomously and during the assembly in the support structure, assuring the non-alteration of the optical definition, which is a key aspect with respect to performance.
- With respect to the applications protecting the reflective surface, the approximate thickness they can have is in 0.5 mm, in comparison with the 1.5-5 mm of the glass. This means that the deflection of the sun rays when they pass through a transparent thickness is much greater in the glass, thereby sustaining a new important loss in performance.
- Finally, a very important aspect of the current power plants is the maintenance thereof and the costs entailed in being able to maintain their performance given that with the deterioration of the reflectors, mainly the outer surface of the glass, due to the weather, the only solution is to dispose of them and replace them with new ones. The new reflector is not disposable, with the deterioration of the outer surface, the latter can be recovered with a simple stripping, washing, drying and new application of the metal plating and protection process in the original installation, thereby obtaining a new mirror ready to be used with the same features as the original at a lower price than the initial price.

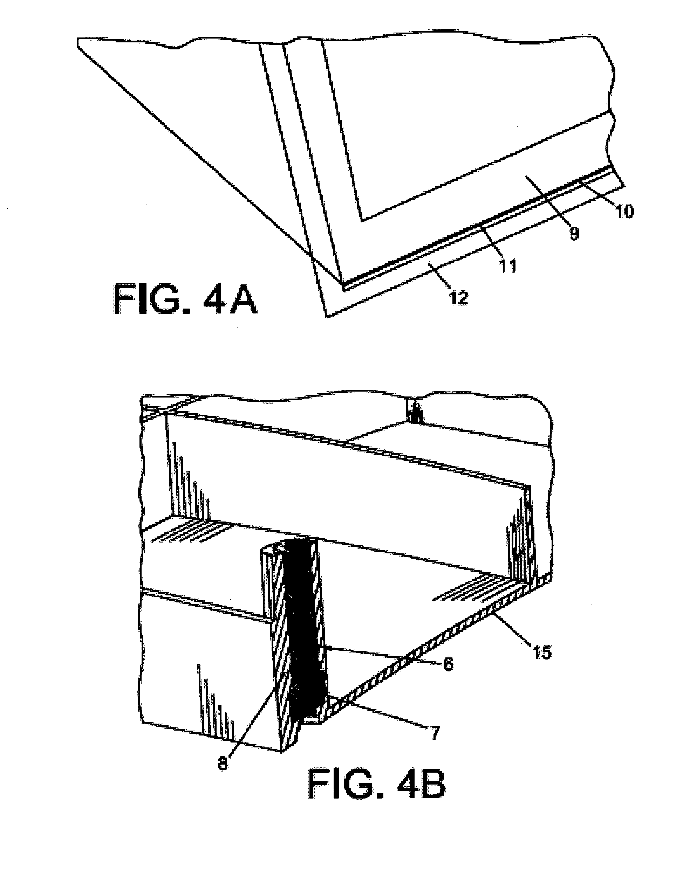

The reflector 5 has a general thickness ranging between 1-7 mm, in addition to a structure of reinforcing ribs in the rear portion autonomously assuring the dimensional stability of the optical definition of the front face (reflective surface) (see Figures 3B and 4B).

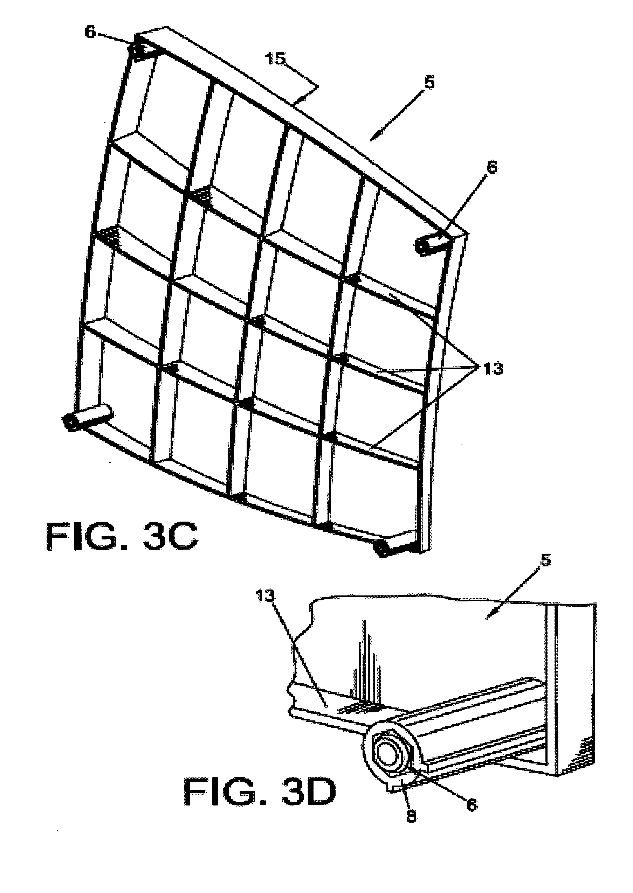

Concerning the fixing of the new reflector 5, there can be between one and six fixing points in the new reflectors or they can be adapted to the number of such points in the reflector that need to be replaced. The way of fixing the fixings consists of inserting a bushing 6 with a threaded hole 7 in the mold at each of the points. The mentioned insertion in the mold is done before injecting the plastic, so once the plastic is injected, all the bushings 6 are overmolded, the overmolded thermoplastic material 8 thereby being part of the assembly (Figures 3D and 4B).

The threaded holes 7 of the bushings 6 allow accurate regulation during the assembly, introducing therein threaded bolts and their lock nuts which would be fixed to the support structure 3.

The reflective surface is obtained as follows (Figure 4A):
1. Base material 9 made from thermoplastic material obtained in an injection mold with a mirror finish on a useful face.
2. Preparation treatments for preparing the useful face before metal plating (for example plasma, etc.).
3. Optionally applying primer 10 on the useful face with a fluid that can optimize the adhesion of the metal plating 11.
4. Deposition of a reflective metal on the useful face by means of the process of introducing the reflector support in a high-vacuum hood, being able to apply two different processes, sublimation or sputtering, thereby obtaining a face having high reflectivity sputtering.
5. Protecting the metal plated surface by means of one or several applications 12 of special protective fluids which become hard and transparent when catalyzed, being applied in specific cabinets after introducing the already metal plated reflector.
6. Quality control operation:
   - Control and maintenance of the finish, mirror polish and tension of the useful base surface
   - Control of the adhesion of the metal plating layer to the base surface.
   - Control of the sealing of the protective applications; adherence to the metal plating layer and sealing on the edges (boundary line of the metal plating).
   - Periodically conducting corrosion, vibration, saline spray, hardness and transparency tests on the protective applications, in addition to other tests which are considered appropriate and can increase product quality and optimization, during the production and subsequent maintenance.

The industrialization leads to the mass production in a completely automated cell consisting of the following elements:
- Injection machine specific for thermoplastic material.
- Injection mold for thermoplastic material.
- Manipulator robot which places the inserts in the mold and the injected parts in a conveyor belt centering device.
- Conveyor belt.
- Optionally, cabinets specific for applying the primer, plasma, etc.
- High-vacuum metal plating hoods with supporting satellites for parts.
- Cabinets specific for the protective applications.
- Protection and packaging station.

The new reflector can be reused once its service life has ended, with the same features as the original.

The new reflector 5 can be constructed with any optical definition:
- Paraboloid of revolution
- Fresnel technology
- Parabolic trough
- Combination of paraboloids of revolution with different focal points (multifocal)
- Ellipses, hyperbolas
- Combination in the same reflector of all the aforementioned definitions, either completely or partially.
- It can be said that it is the adaptation of the reflector of automobile headlights to a solar reflector.

Figures 3B, 3C and 3D show the structure of ribs 13 of the rear face of the receiver 5.

In a comparative analysis with other existing patents, it can be established that:

Patent WO 2007/108837 "Method of making reflector for solar collector or the like and corresponding product" only relates to a single optical definition (parabolic trough), in addition to including glass in all its versions, these aspects being the main differences with the reflector 5 at hand, in addition to achieving reflection by providing an independent foil formed in part by the reflective material, and this foil can be the object of another patent.
- The reflector 5 of the invention does not need glass to protect the reflective material, therefore possible accidents when it is handled are eliminated if it breaks.
- The reflective metal is applied directly on the useful surface. Foil is not needed.
- The base material, injected thermoplastic, comes out of the mold with the desired optical definition and the required consistency autonomously, therefore the metal structure of the collector 5 is mainly and substantially simplified in terms of the cost.

The reflector of Patent WO 2007/108837 "Method of making reflector for solar collector or the like and corresponding product" consists of completely flat plates, obtaining the optical definition by "thermoforming" or cold bending and subsequently adhering to previously thermoformed plates, in both cases, this method does not provide the necessary consistency in such large parts for the accurate maintenance of the optical definition, providing this deficiency to the structure of the collector during the fixing.

Another fundamental and novel aspect is the final cost of the product. The new reflector 5 is initially estimated to be 40% cheaper than current reflectors.

The reflector 5 can replace any of those on the market, respecting the fixings, the position of the absorption tube in the case of the parabolic trough collector, as well as those used in the tower power plants and Stirling dishes, reducing the number of facets in addition to modifying the definition thereof, being able to form them as "pieces of paraboloids of revolution", along with what this involves concerning the performance and final price of the assembly.

Since Fresnel definitions can be reinforced in a determining manner as they are formed in an injection mold like the catadioptric elements of automobiles and the lines of research, which are open concerning this definition, are more economical.

## Claims

1. A solar reflector, **characterized in that** it includes a base support made from injected thermoplastic material 1-7 mm thick and with a structure of reinforcing ribs (13) in the rear portion autonomously assuring the dimensional stability of the optical definition of the front face or reflective surface.

2. The solar reflector according to claim 1, **characterized in that** it includes a predetermined number of fixing points defined upon inserting in the mold respective bushings (6) with a threaded hole (7) and arranged prior to injecting the plastic, being overmolded and integrated in the reflector assembly, the threaded holes of the bushings allowing an accurate regulation during the assembly, introducing therein threaded bolts and their lock nuts, which would be fixed to the support structure of the collector.

3. The solar reflector according to claim 1, **characterized in that** can be constructed with any optical definition:
- Paraboloid of revolution
- Fresnel technology
- Parabolic trough
- Combination of paraboloids of revolution with different focal points (multifocal)
- Ellipses, hyperbolas
- Combination in the same reflector of all the definitions aforementioned either completely or partially.

4. A production method for producing the solar reflector, **characterized in that** the reflective surface is made from thermoplastic material obtained in an injection mold with a mirror finish on the useful face thereof, previously prepared by means of plasma or priming with a fluid optimizing the adhesion; deposition of a reflective metal on the useful face by introducing the reflector in a high-vacuum hood; and protection of the metal surface by means of one or several applications of special protective fluids which become hard and transparent when catalyzed.

5. The production method for producing the solar reflector according to claim 3, **characterized in that** the deposition is by means of sublimation to obtain a surface having high reflectivity.

6. The production method for producing the solar reflector according to claim 3, **characterized in that** the deposition is by means of sputtering for high reflectivity.

7. The production method for producing the solar reflector according to claims 3 to 6, **characterized in that** in addition to being applicable to existing solar thermal energy systems, replacing them providing the same optical definition or new definition, it is applicable to new electric or thermal generation units, such as:
- Large communal buildings
- Industrial parks
- Single-family dwellings
- Etc.
